(19) Europäisches Patentamt
European Patent Office
Office européen des brevets

(11) EP 2 785 809 B1

(12) **EUROPEAN PATENT SPECIFICATION**

(45) Date of publication and mention of the grant of the patent:
**13.04.2022 Bulletin 2022/15**

(21) Application number: **12791815.9**

(22) Date of filing: **30.11.2012**

(51) International Patent Classification (IPC):
***C08L 89/00*** *(2006.01)* ***C09J 179/08*** *(2006.01)*
***C09J 177/12*** *(2006.01)* ***C08K 5/1545*** *(2006.01)*
***C08K 5/21*** *(2006.01)*

(52) Cooperative Patent Classification (CPC):
(C-Sets available)
**C09J 177/12; C08K 5/1545; C08K 5/21;**
**C08L 89/00; C09J 179/08** (Cont.)

(86) International application number:
**PCT/EP2012/074129**

(87) International publication number:
**WO 2013/079680 (06.06.2013 Gazette 2013/23)**

(54) **AQUEOUS BINDER COMPOSITION**

WÄSSRIGE BINDEZUSAMMENSETZUNG

COMPOSITION DE LIAISON AQUEUSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2011 EP 11191809**

(43) Date of publication of application:
**08.10.2014 Bulletin 2014/41**

(73) Proprietor: **Rockwool International A/S**
**2640 Hedehusene (DK)**

(72) Inventors:
- **HANSEN, Erling Lennart**
  **DK-2830 Virum (DK)**
- **NAERUM, Lars**
  **DK-2900 Hellerup (DK)**
- **NISSEN, Povl**
  **DK-3650 Olstykke (DK)**
- **BARTNIK JOHANSSON, Dorte**
  **DK-4000 Roskilde (DK)**

(74) Representative: **Letzelter, Felix Phillip**
**Meissner Bolte Patentanwälte**
**Rechtsanwälte Partnerschaft mbB**
**Postfach 86 06 24**
**81633 München (DE)**

(56) References cited:
**EP-A1- 1 741 726**
**EP-A1- 2 230 222**
**EP-A1- 2 354 205**
**WO-A1-2007/149644**
**WO-A1-2008/023032**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09J 177/12;**
**C09J 179/08**

## Description

### Field of the Invention

The present invention relates to an aqueous binder composition which is particularly suitable as a binder for mineral fibres or as an adhesive for particle board and other composites. The present invention also relates to a method of producing a bonded mineral fibre product using said binder, and to a mineral fibre product comprising mineral fibres in contact with the cured binder.

### Background of the Invention

Mineral fibre products generally comprise man-made vitreous fibres (MMVF) such as, e.g., glass fibres, ceramic fibres, basalt fibres, slag wool, mineral wool and stone wool, which are bonded together by a cured thermoset polymeric binder material. For use as thermal or acoustical insulation products, bonded mineral fibre mats are generally produced by converting a melt made of suitable raw materials to fibres in conventional manner, for instance by a spinning cup process or by a cascade rotor process. The fibres are blown into a forming chamber and, while airborne and while still hot, are sprayed with a binder solution and randomly deposited as a mat or web onto a travelling conveyor. The fibre mat is then transferred to a curing oven where heated air is blown through the mat to cure the binder and rigidly bond the mineral fibres together.

In the past, the binder resins of choice have been phenol-formaldehyde resins which can be economically produced and can be extended with urea prior to use as a binder. However, the existing and proposed legislation directed to the lowering or elimination of formaldehyde emissions have led to the development of formaldehyde-free binders such as, for instance, the binder compositions based on polycarboxy polymers and polyols or polyamines, such as disclosed in EP-A-583086, EP-A-990727, EP-A-1741726, US-A-5,318,990 and US-A-2007/0173588.

Another group of non-phenol-formaldehyde binders are the addition/- elimination reaction products of aliphatic and/or aromatic anhydrides with alkanolamines, e.g., as disclosed in WO 99/36368, WO 01/05725, WO 01/96460, WO 02/06178, WO 2004/007615 and WO 2006/061249. These binder compositions are water-soluble and exhibit excellent binding properties in terms of curing speed and curing density. WO 2008/023032 discloses urea-modified mineral wool binders of that type. WO 2010/10618 discloses binder compositions for mineral fibres which comprise amine/polycarboxylic acid reaction products of that type and a sugar syrup.

Soybeans and soybean products are mainly used for human and animal nutrition. Approximately 85% of the world's soybean crop is processed into soybean meal and vegetable oil. Among the legumes, the soybean is preeminent for its high (38-45%) protein content as well as its high (20%) oil content. Soybean oil is the primary source of biodiesel in the United States. To extract soybean oil from seed, the soybeans are cracked, adjusted for moisture content, rolled into flakes and solvent-extracted. The remaining high-protein soybean meal or defatted soy bean flour is used mainly as animal feed.

Soybeans are also used in industrial products, including oils, soap, cosmetics, resins, and plastics. In 1936, Ford Motor Company developed a method where high-protein soybean meal was plastified by reaction with phenol and formaldehyde, rolled together with fibers and then pressed into various automotive parts for their cars. In the early 1900s, soy protein was used as an adhesive ingredient in ply-wood. However, the problem of low moisture resistance led to its replacement with petroleum-based resins. Particle board composites were subsequently developed that utilized urea-formaldehyde resins to bind the wood particles rather than agricultural adhesives.

Soybean protein is a combination of 18 amino acids of wide chemical diversity such as amine, carboxylic acid, hydroxyl and mercaptan functionalities. Each of these functionalities is polar and contributes to water sensitivity. Accordingly, in order to use soy protein as an effective adhesive, it is necessary to counteract this sensitivity. Additionally, the soybean binder must be chemically transformed into a hydrophobic adhesive without creating toxic by-products and/or waste streams.

In view of the foregoing, it would be a significant advancement in the art to provide an agriculturally based adhesive/binder which could be utilized, for instance, to replace urea-formaldehyde resins in particle board and other composites. It would be a further advancement in the art if such an adhesive/binder was primarily based upon renewable resources.

### Summary of the Invention

It was an object of the present invention to provide an aqueous binder composition which is particularly suitable as a binder for mineral fibres or as adhesive for particle board and other composites, and is economically produced from renewable resources.

A further object of the present invention was to provide a mineral fibre product bonded with such a binder composition and having improved ageing properties under humid conditions.

In accordance with a first aspect of the present invention, there is provided an aqueous binder composition comprising:

(1) a water-soluble binder component obtainable by reacting at least one alkanolamine with at least one polycarboxylic acid or anhydride and, optionally, treating the reaction product with a base;

(2) a soy protein product; one or more of the following binder components:

(3) a sugar component; and optionally
(4) urea,

wherein the polycarboxylic acid or anhydride is selected from dicarboxylic, tricarboxylic , tetracarboxylic and pentacarboxylic acids and anhydrides, and combinations thereof,wherein the minimum content of component (3) is 10 wt%.

In accordance with a second aspect of the present invention, there is provided a method of producing a bonded mineral fibre product which comprises the steps of contacting mineral fibres or a mineral fibre product with an aqueous binder composition as defined above, and curing the binder composition.

In accordance with a third aspect of the present invention, there is provided a mineral fibre product comprising mineral fibres in contact with the cured binder composition defined above.

**Description of the Preferred Embodiments**

The aqueous binder composition according to the present invention comprises:

(1) a water-soluble binder component obtainable by reacting at least one alkanolamine with at least one polycarboxylic acid or anhydride and, optionally, treating the reaction product with a base;
(2) a soy protein product; one or more of the following binder components:
(3) a sugar component; and optionally
(4) urea wherein the polycarboxylic acid or anhydride is selected from dicarboxylic, tricarboxylic , tetracarboxylic and pentacarboxylic acids and anhydrides, and combinations thereof,wherein the minimum content of component (3) is 10 wt%.

Generally, the binder composition comprises

10 to 50 wt.% of component (1) and
50 to 0 wt.% of component (2) and, if used, component (3) and/or component (4),
the proportion of component (2) being at least 5 wt.%, preferably at least 10 wt.%, and more preferably at least 20 wt.%.

Preferably, components (1), (2), (3) and (4) are used in proportions such that:

the minimum content of component (1) is 15 wt.% or 20 wt.% or 25 wt% and the maximum content is 45 wt.% or 40 wt.% or 35 wt.%;
the minimum content of component (2) is 5 wt.% or 10 wt.% or 20 wt.% and the maximum content is 60 wt.% or 55 wt.% or 50 wt.%;
the minimum content of component (3), if used, is 10 wt.% or 20 wt.% or 30 wt.% and the maximum content is 80 wt.% or 70 wt.% or 60 wt.%;
the minimum content of component (4), if used, is 10 wt.% or 20 wt.% or 30 wt.% and the maximum content is 60 wt.% or 55 wt.% or 50 wt.%.

Thus, component (1) may be present, for instance, in an amount of 10, 15, 20, 25, 30, 35, 40, 45 or 50 wt.%.

Component (2) may be present, for instance, in an amount of 5, 10, 15, 20, 25, 30, 35, 40, 45, 50, 55 or 60 wt.%.

Component (3) may be present, for instance, in an amount of 0, 5, 10, 15, 20, 25, 30, 35, 40, 45, 50, 55, 60, 65, 70, 75 or 80 wt.%.

Component (4) may be present, for instance, in an amount of 0, 5, 10, 15, 20, 25, 30, 35, 40, 45, 50, 55 or 60 wt.%.

The percentages of components (1), (2) and (3) refer to the solids content, as measured after heat treatment for 1 hour at 200°C.

The percentages of component (4) refer to the simple weighted off amount of urea (dry matter) at standard conditions of 25°C, 1 atm, without a heat treatment.

The percentages of all components are based on the total amount of components (1) to (4) as 100%.

Binder Component (1)

Binder component (1) of the aqueous binder composition according to the present invention comprises the water-soluble reaction product of an alkanolamine with a carboxylic acid or anhydride.

Alkanolamines

Preferred alkanolamines for use in the preparation of binder component are alkanolamines having at least two hydroxy groups such as, for instance, alkanolamines represented by the formula

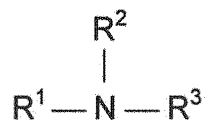

wherein $R^1$ is hydrogen, a $C_{1-10}$ alkyl group or a $C_{1-10}$ hydroxyalkyl group; and $R^2$ and $R^3$ are $C_{1-10}$ hydroxyalkyl groups.

Preferably, $R^2$ and $R^3$, independently are $C_{2-5}$ hydroxyalkyl groups, and $R^1$ is hydrogen, a $C_{1-5}$ alkyl group or a $C_{2-5}$ hydroxyalkyl group. Particularly preferred hydroxyalkyl groups are ß-hydroxyalkyl groups.

Specific examples of suitable alkanolamines are monoethanolamine, diethanolamine, triethanolamine, diisopropanolamine, triisopropanolamine, methyldiethanolamine, ethyldiethanolamine, n-butyldiethanolamine, methyldiisopropanolamine, ethylisopropanolamine, ethyldiisopropanolamine, aminoethylethanolamine, 3-amino-1,2-propanediol, 2-amino-1,3-propanediol and tris(hydroxymethyl)aminomethane. Diethanolamine is the currently preferred alkanolamine.

Polycarboxylic acid component

The polycarboxylic acid component is generally selected from dicarboxylic, tricarboxylic, tetracarboxylic, pentacarboxylic, and like polycarboxylic acids, anhydrides, salts and combinations thereof.

Preferred polycarboxylic acid components employed as starting materials for reacting with the other binder components are carboxylic anhydrides. The carboxylic anhydride starting material may be selected from saturated or unsaturated aliphatic and cycloaliphatic anhydrides, aromatic anhydrides and mixtures thereof, saturated or unsaturated cycloaliphatic anhydrides, aromatic anhydrides and mixtures thereof being preferred. In a particularly preferred embodiment of the invention, two different anhydrides selected from cycloaliphatic and/or aromatic anhydrides are employed. These different anhydrides are preferably reacted in sequence.

Specific examples of suitable aliphatic carboxylic anhydrides are succinic anhydride, maleic anhydride and glutaric anhydride. Specific examples of suitable cycloaliphatic anhydrides are tetrahydrophthalic anhydride, hexahydrophthalic anhydride, methyltetrahydrophthalic anhydride and nadic anhydride, i.e. endo-cis-bicyclo[2.2.1]-5-heptene-2,3-dicarboxylic anhydride. Specific examples of suitable aromatic anhydrides are phthalic anhydride, methylphthalic anhydride, trimellitic anhydride and pyromellitic dianhydride.

In the above embodiment employing two different anhydrides, a combination of cycloaliphatic anhydride and aromatic anhydride is particularly preferred, e.g. a combination of tetrahydrophthalic anhydride (THPA) and trimellitic anhydride (TMA). The molar ratio of cycloaliphatic anhydride to aromatic anhydride is preferably within the range of from 0.1 to 10, more preferably within the range of from 0.5 to 3.

If appropriate, an additional polycarboxylic acid may be employed in the reaction and is preferably added to the reaction mixture before addition of the anhydride reactant. Specific examples of such additional polycarboxylic acids are adipic acid, aspartic acid, azelaic acid, butane tricarboxylic acid, butan tetracarboxylic acid, citraconic acid, citric acid, fumaric acid, glutaric acid, itaconic acid, maleic acid, malic acid, mesaconic acid, oxalic acid, sebacic acid, succinic acid, tartaric acid and trimesic acid.

Reaction conditions

The reaction between the alkanolamine and polycarboxylic reactants is carried out in the usual manner, for instance, as described in WO 99/36368, WO 01/05725, WO 02/06178, WO 2004/007615, WO 2006/061249, WO 2008/023032 and WO 2010/10618, the entire contents of which is incorporated herein by reference.

The reaction temperature is generally within the range of from 50°C to 200°C. In a preferred embodiment and, in particular, when two different anhydrides are employed, the alkanolamine is first heated to a temperature of at least about 40°C, preferably at least about 60°C, whereafter the first anhydride is added and the reaction temperature is raised to at least about 70°C, preferably at least about 95°C and more preferably at least about 125°C, at which temperature the second anhydride is added to the reaction mixture when substantially all the first anhydride has dissolved and/or reacted. Increasing the reaction temperature from 70-95°C to 100-200°C allows a higher conversion of monomers to oligomers. In this case, a preferred temperature range is 105-170°C, more preferably 110-150°C.

If water is added after the first anhydride has reacted, either together with the second anhydride or before addition of the second anhydride or at the end of the reaction, in an amount to make the binder easily pumpable, a binder having an increased molecular weight (compared to water addition from the start) is obtained which still has a desired pumpability, viscosity, and water dilutability and contains less unreacted monomers.

In the preparation of binder component (1), the proportion of the alkanolamine and polycarboxylic reactants is preferably selected such that the ratio of equivalents of amine plus hydroxy groups (NH+OH) to equivalents of carboxy groups (COOH) is within the range of from 0.4 to 2.0, more preferably 1.0 to 1.8.

In order to improve the water solubility and dilutability of the binder, a base may be added up to a pH of about 8, preferably a pH of between about 5-8, and more preferably a pH of about 6. Furthermore, the addition of a base will cause at least partial neutralization of unreacted acids and a concomittant reduction of corrosiveness. Normally, the base will be added in an amount sufficient to achieve the desired water solubility or dilutability. The base is preferably selected from volatile bases which will evaporate at or below curing temperature and hence will not influence curing. Specific examples of suitable bases are ammonia ($NH_3$) and organic amines such as diethanolamine (DEA) and triethanolamine (TEA). The base is preferably added to the reaction mixture after the reaction between the alkanol amine and the carboxylic anhydride has been actively stopped by adding water.

Soy protein product

Preferred soy protein products for use in the present invention are, for instance, soy meal, soy flour, soy protein concentrate, soy protein isolate, soy polymer or other forms of soy protein, and mixtures thereof.

"Soy meal" is the material remaining after solvent extraction of oil from soybean flakes, with a soy protein content of approx. 50%. The meal residue is heat-treated with moist steam and ground in a hammer mill.

"Soy flour" refers to defatted soybeans ground finely enough to pass through a 100-mesh or smaller screen. It is the starting material for production of soy concentrate and soy protein isolate. Defatted soy flour is obtained from solvent extracted flakes and contains less than 1% oil. Full-fat soy flour is made from unextracted, dehulled beans and contains about 18% to 20% oil. Low-fat soy flour is made by adding back some oil to defatted soy flour. The lipid content varies according to specifications, usually between 4.5% and 9%. High-fat soy flour can also be produced by adding back soybean oil to defatted flour at the level of 15%.

The currently preferred soy protein product is soy flour which may, for instance, be used in the form of an aqueous dispersion comprising soy flour and a dispersant.

Sugar component

The sugar component (3) optionally employed in accordance with the present invention is preferably selected from sucrose and reducing sugars such as hexoses and pentoses, and mixtures thereof.

A reducing sugar is any sugar that, in solution, has an aldehyde or a ketone group which allows the sugar to act as a reducing agent. In accordance with the present invention, reducing sugars may be used as such or as a carbohydrate compound that yields one or more reducing sugars in situ under thermal curing conditions. The sugar or carbohydrate compound may be a monosaccharide in its aldose or ketose form, a disaccharide, a triose, a tetrose, a pentose, a hexose, or a heptose; or a di-, oligo- or polysaccharide; or combinations thereof. Specific examples are glucose (= dextrose), starch hydrolysates such as corn syrup, arabinose, xylose, ribose, galactose, mannose, fructose, maltose, lactose and invert sugar. Compounds such as sorbitol and mannitol, on the other hand, which do not contain or supply aldehyde or ketone groups, are less effective in the instant invention.

Crystalline dextrose is normally produced by subjecting an aqueous slurry of starch to hydrolysis by means of heat, acid or enzymes. Depending on the reaction conditions employed in the hydrolysis of starch, a variety of mixtures of glucose and intermediates is obtained which may be characterized by their DE number. DE is an abbreviation for Dextrose Equivalent and is defined as the content of reducing sugars, expressed as the number of grams of anhydrous D-glucose per 100 g of the dry matter in the sample, when determined by the method specified in International Standard ISO 5377-1981 (E). This method measures reducing end groups and attaches a DE of 100 to pure glucose (= dextrose) and a DE of 0 to pure starch.

Only glucose syrup of high DE can crystallise easily and yield a product in powder or granular form. A most popular crystallised product is dextrose monohydrate with application in medicine and chewing tablets. Dextrose monohydrate is pure glucose (DE 100).

With lower DE numbers, the syrup gradually loses its tendency to crystallise. Below approx. 45 DE, the syrup can be concentrated into a stable, non-crystallising liquid, for instance, Standard 42 DE syrup which finds wide spread use in canned fruit preserves, ice cream, bakery products, jam, candy, and all kinds of confectionery.

A preferred sugar component for use in the present invention is a reducing sugar having a dextrose equivalent DE of 40 to 100, preferably 50 to 100, more preferably 86 to 100, and most preferably 90 to 100. Particularly preferred reducing sugar components are dextrose, high DE glucose syrup, high-fructose syrup and mixtures thereof. Commercially available high DE glucose syrups are "Glucose syrup" from Cargill ( DE > 90) and "Sirodex 431" from Syral (DE = 95).

For commercial and practical reasons, dextrose and sucrose are the most preferred sugar components in the present invention.

Urea

Urea is an optional component of the binder composition according to the present invention. It may be added in substance (e.g., as prills) or in aqueous solution.

Binder composition

The binder composition according to the present invention preferably has a solids content of from 10 to 75 wt.%. This is often the concentration range of the binder in storage containers before use. In a form ready for application, the binder preferably has a solids content of from 1 to 30 wt.%. For transportation, a solids content of the binder composition of from 40 to 75 wt.% is frequently employed.

In order to achieve adequate application properties and, in particular, spraying properties, the viscosity of the binder composition may be adjusted. This is accomplished, for instance, by controlling the type and concentration of binder components in the aqueous binder system. Viscosity may be kept within the desired ranges e.g. by controlling the molecular weight of binder component (lower reaction temperature, stopping the reaction by adding water at an earlier reaction stage, etc.), and by properly adjusting the relative amounts of the binder components and water solvent.

Additives

The binder compositions according to the present invention may additionally comprise one or more conventional binder additives. These include, for instance, curing accelerators such as, e.g., ß-hydroxyalkylamides; the free acid and salt forms of phosphoric acid, hypophosphorous acid and phosphonic acid. Other strong acids such as boric acid, sulphuric acid, nitric acid

and p-toluenesulphonic acid may also be used, either alone or in combination with the just mentioned acids, in particular with phosphoric, hypophosphorous acid or phosphonic acid. Other suitable binder additives are silane coupling agents such as γ-aminopropyltriethoxysilane; thermal stabilizers; UV stabilizers; emulsifiers; surface active agents, particularly nonionic surfactants; biocides; plasticizers; anti-migration aids; coalescents; fillers and extenders such as starch, clay, silicates and magnesium hydroxide; pigments such as titanium dioxide; hydrophobizing agents such as fluorinated compounds, mineral oils and silicone oils and resins; flame retardants; corrosion inhibitors such as thiourea; antifoaming agents; antioxidants; and others.

These binder additives and adjuvants may be used in conventional amounts generally not exceeding 20 wt.% of the binder solids. The amount of curing accelerator in the binder composition is generally between 0.05 and 5 wt.%, based on solids.

The final aqueous binder composition generally has a solids content of from 1 to 25 wt.% and a pH of 6 or greater.

Mineral fibre product

The mineral fibres employed may be any of man-made vitreous fibres (MMVF), glass fibres, ceramic fibres, basalt fibres, slag fibres, rock fibres, stone fibres and others. These fibres may be present as a wool product, e.g. like a rock wool product.

Suitable fibre formation methods and subsequent production steps for manufacturing the mineral fibre product are those conventional in the art. Generally, the binder is sprayed immediately after fibrillation of the mineral melt on to the airborne mineral fibres. The aqueous binder composition is normally applied in an amount of 0.1 to 10 %, preferably 0.2 to 8 % by weight, of the bonded mineral fibre product on a dry basis.

The spray-coated mineral fibre web is generally cured in a curing oven by means of a hot air stream. The hot air stream may be introduced into the mineral fibre web from below, or above or from alternating directions in distinctive zones in the length direction of the curing oven.

Typically, the curing oven is operated at a temperature of from about 150°C to about 350°C. Preferably, the curing temperature ranges from about 200 to about 300°C. Generally, the curing oven residence time is from 30 seconds to 20 minutes, depending on, for instance, the product density.

If desired, the mineral wool web may be subjected to a shaping process before curing. The bonded mineral fibre product emerging from the curing oven may be cut to a desired format e.g., in the form of a batt. Thus, the mineral fibre products produced, for instance, have the form of woven and nonwoven fabrics, mats, batts, slabs, sheets, plates, strips, rolls, granulates and other shaped articles which find use, for example, as thermal or acoustical insulation materials, vibration damping, construction materials, facade insulation, reinforcing materials for roofing or flooring applications, as filter stock, as horticultural growing media and in other applications.

In accordance with the present invention, it is also possible to produce composite materials by combining the bonded mineral fibre product with suitable composite layers or laminate layers such as, e.g., metal, glass surfacing mats and other woven or non-woven materials.

The mineral fibre products according to the present invention generally have a density within the range of from 10 to 250 kg/m$^3$, preferably 20 to 200 kg/m$^3$. The mineral fibre products generally have a loss on ignition (LOI) within the range of 0.3 to 12.0 %, preferably 0.5 to 8.0 %.

Although the aqueous binder composition according to the present invention is particularly useful for bonding mineral fibres, it may equally be employed in other applications typical for binders, adhesives and sizing agents, e.g. as a binder for foundry sand, chipboard, glass fibre tissue, cellulosic fibres, non-woven paper products, composites, moulded articles, coatings etc. In a particularly preferred embodiment, the binder composition is used as an adhesive in the production of particle board and other composites.

The following examples are intended to further illustrate the invention without limiting its scope. The solids content is determined at 200 °C, 1 hour and expressed as SC (wt.%).

**Examples**

Preparation of binder component (1)

158 g of diethanolamine (DEA) are placed in a 1-litre glass reactor provided with a stirrer and a heating/cooling jacket. The temperature of the diethanolamine is raised to 60°C whereafter 91 g of tetrahydrophthalic anhydride (THPA) are added. After raising the temperature and keeping it at 130°C, a second portion of 46 g of tetrahydrophthalic anhydride is added followed by 86 g of trimellitic anhydride (TMA). After reacting at 130°C for 1 hour, the mixture is cooled to 95°C and 210 g of water added and the mixture stirred for 1 hour.

After cooling to ambient temperature, 1% of hypophosphorous acid, 0.5% of a silane (y-aminopropyltriethoxysilane) and 250 ml/kg solids of ammonia (25%) were added to give Component (1).

Preparation of binder compositions

Three binder compositions were made by mixing Component (1) with (2) an aqueous dispersion of soy flour (from Ashland) and (3) a glucose syrup ("Sirodex 431" from Syral, DE equivalent: approx. 95) in amounts such that the proportion of (1), (2) and (3), based on the SC (wt.%) was as follows:

| | | |
|---|---|---|
| Binder 1: | Component (1) | 45 wt.% |
| | Component (2) | 10 wt.% |
| | Component (3) | 45 wt.% |
| Binder 2: | Component (1) | 42 wt.% |
| | Component (2) | 16 wt.% |
| | Component (3) | 42 wt.% |
| Binder 3: | Component (1) | 38 wt.% |
| | Component (2) | 24 wt.% |
| | Component (3) | 38 wt.% |

The binders were used by spraying the binder solutions through nozzles near a cascade rotor apparatus into the cloud of fibres in a forming chamber. The coated fibres were collected and transferred into a curing oven for curing at a temperature of 285°C.

The bonded mineral wool products were tested for their delamination strength according to Standard EN 1607 both in the non-aged state and after ageing in a climatic chamber at 70°C and 95% RH for 28 days.

The products showed an increasing remaining strength level for an increasing amount of soy protein; i.e. Binder 3 provided the highest remaining strength level.

Determination of solids content (SC)

In order to determine the amount of non-volatile material that remains after heat treatment for 1 hour at 200°C, a specified amount of material is dried and cured in an incubator. The amount of solids is determined by weighing prior to and after the heat treatment.

Apparatus and Reagents:

Finn-pipette 1-5 ml
Incubator with air circulation 200°C +/- 5°C
Analytical balance, accuracy 0.001 g
Aluminium trays
Disc of mineral wool, annealed at 590°C for 30 minutes, density 80-100 kg/m$^3$, thickness approx. 10 mm, and diameter approx. 50 mm.

Procedure:
Place the mineral wool disc in an aluminium tray. Determine the total weight of tray and wool (M1). Shake the sample before sampling. Suck up 2.5 ml binder in a pipette and distribute it over the mineral wool disc, weigh the disc again (M2). Place the sample in the incubator at 200°C +/- 5°C for one hour. Weigh the sample after a cooling time of 20 minutes (M3). Always perform the determination in duplicate.

Calculation and Expression of results:
Indicate the result as % with 1 decimal. Indicate the result as % of the amount weighed.

$$\text{Non-volatile} = \frac{M3 - M1}{M2 - M1} x100\%$$

Indicate the result as the average value of the duplicate determination. The two individual results may not deviate by more than 0.5% (absolute SC%).

## Claims

1. An aqueous binder composition comprising:

   (1) a water-soluble binder component obtainable by reacting at least one alkanolamine with at least one polycarboxylic acid or anhydride and, optionally, treating the reaction product with a base;
   (2) a soy protein product; one or more of the following binder components:
   (3) a sugar component; and optionally,
   (4) urea;
   wherein the polycarboxylic acid or anhydride is selected from dicarboxylic, tricarboxylic, tetracarboxylic and pentacarboxylic acids and anhydrides, and combinations thereof;
   wherein the minimum content of component (3) is 10 wt.%.

2. The binder composition of claim 1, wherein the alkanolamine is selected from monoethanolamine, diethanolamine, triethanolamine, diisopropanolamine, triisopropanolamine, methyldiethanolamine, ethyldiethanolamine, n-butyldiethanolamine, methyldiisopropanolamine, ethylisopropanolamine, ethyldiisopropanolamine, 3-amino-1,2-propanediol, 2-amino-1,3-propane-diol, aminoethylethanolamine and tris-(hydroxymethyl)-aminomethane.

3. The binder composition of claim 1, wherein the polycarboxylic acid or anhydride is selected from at least one of tetrahydrophthalic acid, hexahydrophthalic acid, methyltetrahydrophthalic acid, phthalic acid, methylphthalic acid, trimellitic acid, pyromellitic acid and the corresponding anhydrides.

4. The binder composition of claim 3, wherein the polycarboxylic acid component additionally comprises a polycarboxylic acid selected from adipic acid, aspartic acid, azelaic acid, butane tricarboxylic acid, butane tetracarboxylic acid, citraconic acid, citric acid, fumaric acid, glutaric acid, itaconic acid, maleic acid, malic acid, mesaconic acid, oxalic acid, sebacic acid, succinic acid, tartaric acid and trimesic acid.

5. The binder composition of any one of the preceding claims, wherein the soy protein product (2) is selected from soy meal, soy flour, soy protein concentrate, soy protein isolate, soy polymer or other forms of soy protein, and mixtures thereof.

**6.** The binder composition of any one of the preceding claims, wherein the sugar component (3) is selected from sucrose and reducing sugars such as hexoses and pentoses, and mixtures thereof.

**7.** The binder composition of claim 6, wherein the sugar component (3) is a reducing sugar having a dextrose equivalent (DE) of 40 to 100, preferably 50 to 100, and more preferably 86 to 100.

**8.** The binder composition of claim 6 or 7, wherein the sugar component (3) is a reducing sugar selected from dextrose, high DE glucose syrup and high-fructose syrup.

**9.** The binder composition of any one of the preceding claims, which comprises

10 to 50 wt.% of component (1) and
50 to 90 wt.% of component (2) and, if used, component (3) and/or component (4),
the proportion of component (2) being at least 5 wt.%, preferably at least 10 wt.%, and more preferably at least 20 wt.%, based on the total amount of components (1) to (4).

**10.** A method of producing a bonded mineral fibre product which comprises the steps of contacting the mineral fibres or mineral fibre product with a binder composition according to any one of claims 1 to 9, and curing the binder composition.

**11.** The method of claim 11 wherein curing is effected at a curing temperature of from 150°C to 350°C.

**12.** Mineral fibre product comprising mineral fibres in contact with the cured binder composition according to any of the claims 1 to 9.

**Patentansprüche**

**1.** Wässrige Bindemittelzusammensetzung, umfassend:

(1) eine wasserlösliche Bindemittelkomponente, erhältlich durch Umsetzen von mindestens einem Alkanolamin mit mindestens einer Polycarbonsäure oder einem Polycarbonsäureanhydrid und gegebenenfalls Behandeln des Reaktionsprodukts mit einer Base;
(2) ein Sojaproteinprodukt; eine oder mehrere der folgenden Bindemittelkomponenten:
(3) eine Zuckerkomponente; und gegebenenfalls
(4) Harnstoff;
wobei die Polycarbonsäure oder das Polycarbonsäureanhydrid ausgewählt ist aus Dicarbon-, Tricarbon-, Tetracarbon- und Pentacarbonsäuren und -anhydriden und Kombinationen davon;
wobei der Mindestgehalt der Komponente (3) 10 Gew.-% beträgt.

**2.** Bindemittelzusammensetzung nach Anspruch 1, wobei das Alkanolamin ausgewählt ist aus Monoethanolamin, Diethanolamin, Triethanolamin, Diisopropanolamin, Triisopropanolamin, Methyldiethanolamin, Ethyldiethanolamin, n-Butyldiethanolamin, Methyldiisopropanolamin, Ethylisopropanolamin, Ethyldiisopropanolamin, 3-Amino-1,2-propandiol, 2-Amino-1,3-propandiol, Aminoethylethanolamin und Tris-(hydroxymethyl)-aminomethan.

**3.** Bindemittelzusammensetzung nach Anspruch 1, wobei die Polycarbonsäure oder das Polycarbonsäureanhydrid ausgewählt ist aus mindestens einer bzw. einem von Tetrahydrophthalsäure, Hexahydrophthalsäure, Methyltetrahydrophthalsäure, Phthalsäure, Methylphthalsäure, Trimellithsäure, Pyromellithsäure und den entsprechenden Anhydriden.

**4.** Bindemittelzusammensetzung nach Anspruch 3, wobei die Polycarbonsäurekomponente zusätzlich eine Polycarbonsäure umfasst, die ausgewählt ist aus Adipinsäure, Asparaginsäure, Azelainsäure, Butantricarbonsäure, Butantetracarbonsäure, Citraconsäure, Citronensäure, Fumarsäure, Glutarsäure, Itaconsäure, Maleinsäure, Apfelsäure, Mesaconsäure, Oxalsäure, Sebacinsäure, Bernsteinsäure, Weinsäure und Trimesinsäure.

**5.** Bindemittelzusammensetzung nach einem der vorhergehenden Ansprüche, wobei das Sojaproteinprodukt (2) ausgewählt ist aus Sojaschrot, Sojamehl, Sojaproteinkonzentrat, Sojaproteinisolat, Sojapolymer oder anderen Formen von Sojaprotein und Mischungen davon.

**6.** Bindemittelzusammensetzung nach einem der vorhergehenden Ansprüche, wobei die Zuckerkomponente (3) ausgewählt ist aus Saccharose und reduzierenden Zuckern, wie z.B. Hexosen und Pentosen, und Mischungen davon.

**7.** Bindemittelzusammensetzung nach Anspruch 6, wobei die Zuckerkomponente (3) ein reduzierender Zucker mit einem Dextroseäquivalent (DE) von 40 bis 100, bevorzugt 50 bis 100 und bevorzugter 86 bis 100 ist.

**8.** Bindemittelzusammensetzung nach Anspruch 6

oder 7, wobei die Zuckerkomponente (3) ein reduzierender Zucker ist, der aus Dextrose, Glukosesirup mit hohem DE-Wert und High-Fructosesirup ausgewählt ist.

**9.** Bindemittelzusammensetzung nach einem der vorhergehenden Ansprüche, welche 10 bis 50 Gew.-% der Komponente (1) und 50 bis 90 Gew.-% der Komponente (2) und, falls verwendet, der Komponente (3) und/oder der Komponente (4) umfasst, wobei der Anteil der Komponente (2) mindestens 5 Gew.-%, bevorzugt mindestens 10 Gew.-% und bevorzugter mindestens 20 Gew.-%, bezogen auf die Gesamtmenge der Komponenten (1) bis (4), beträgt.

**10.** Verfahren zur Herstellung eines gebundenen Mineralfaserprodukts, das die Schritte des Inkontaktbringens der Mineralfasern oder des Mineralfaserprodukts mit einer Bindemittelzusammensetzung nach einem der Ansprüche 1 bis 9 und des Härtens der Bindemittelzusammensetzung umfasst.

**11.** Verfahren nach Anspruch 11, wobei die Härtung bei einer Härtungstemperatur von 150 °C bis 350 °C erfolgt.

**12.** Mineralfaserprodukt, das Mineralfasern in Kontakt mit der gehärteten Bindemittelzusammensetzung nach einem der Ansprüche 1 bis 9 umfasst.

## Revendications

**1.** Composition aqueuse de liant comprenant :

(1) un composant liant soluble dans l'eau pouvant être obtenu par réaction d'au moins une alcanolamine avec au moins un anhydride ou acide polycarboxylique et, éventuellement, traitement du produit réactionnel avec une base ;
(2) un produit de protéine de soja ; un ou plusieurs des composants liants suivants :
(3) un composant sucre ; et éventuellement
(4) de l'urée,
dans laquelle l'anhydride ou acide polycarboxylique est choisi parmi les anhydrides et acides dicarboxyliques, tricarboxyliques, tétracarboxyliques et pentacarboxyliques, ainsi que leurs combinaisons ;
dans laquelle la teneur minimale en le composant (3) est de 10 % en poids.

**2.** Composition de liant selon la revendication 1, dans laquelle l'alcanolamine est choisie parmi la monoéthanolamine, la diéthanolamine, la triéthanolamine, la diisopropanolamine, la triisopropanolamine, la méthyl-diéthanolamine, l'éthyldiéthanolamine, la n-butyl-diéthanolamine, la méthyldiisopropanolamine, l'éthyl-isopropanolamine, l'éthyldiisopropanolamine, le 3-amino-1,2-propanediol, le 2-amino-1,3-propanediol, l'amino-éthyléthanolamine et le tris(hydroxyméthyl)-aminométhane.

**3.** Composition de liant selon la revendication 1, dans laquelle l'anhydride ou acide polycarboxylique est au moins l'un choisi parmi l'acide tétrahydrophtalique, l'acide hexahydrophtalique, l'acide méthyltétrahydro-phtalique, l'acide phtalique, l'acide méthylphtalique, l'acide trimellitique, l'acide pyromellitique et les anhydrides correspondants.

**4.** Composition de liant selon la revendication 3, dans laquelle le composant acide polycarboxylique comprend de plus un acide polycarboxylique choisi parmi l'acide adipique, l'acide aspartique, l'acide azélaïque, l'acide butanetricarboxylique, l'acide butanetétracarboxylique, l'acide citraconique, l'acide citrique, l'acide fumarique, l'acide glutarique, l'acide itaconique, l'acide maléique, l'acide malique, l'acide mésaconique, l'acide oxalique, l'acide sébacique, l'acide succinique, l'acide tartrique et l'acide trimésique.

**5.** Composition de liant selon l'une quelconque des revendications précédentes, dans laquelle le produit de protéine de soja (2) est choisi parmi une farine brute de soja, une farine de soja, un concentré de protéine de soja, un isolat de protéine de soja, un polymère de soja et d'autres formes de protéine de soja, ainsi que leurs mélanges.

**6.** Composition de liant selon l'une quelconque des revendications précédentes, dans laquelle le composant sucre (3) est choisi parmi le saccharose et les sucres réducteurs tels que les hexoses et les pentoses, ainsi que leurs mélanges.

**7.** Composition de liant selon la revendication 6, dans laquelle le composant sucre (3) est un sucre réducteur ayant un équivalent dextrose (DE) de 40 à 100, de préférence de 50 à 100, et mieux encore de 86 à 100.

**8.** Composition de liant selon la revendication 6 ou 7, dans laquelle le composant sucre (3) est un sucre réducteur choisi parmi le dextrose, le sirop de glucose à DE élevé et le sirop à forte teneur en fructose.

**9.** Composition de liant selon l'une quelconque des revendications précédentes, qui comprend

10 à 50 % en poids de composant (1) et
50 à 90 % en poids de composant (2) et, s'ils sont utilisés, de composant (3) et/ou de composant (4),
la proportion de composant (2) étant d'au moins 5 % en poids, de préférence d'au moins 10 %

en poids, et mieux encore d'au moins 20 % en poids par rapport à la quantité totale des composants (1) à (4).

**10.** Procédé de production d'un produit en fibres minérales liées, qui comprend les étapes consistant à mettre les fibres minérales ou le produit en fibres minérales en contact avec une composition de liant selon l'une quelconque des revendications 1 à 9, et à durcir la composition de liant.

**11.** Procédé selon la revendication 11, dans lequel le durcissement est effectué à une température de durcissement de 150°C à 350°C.

**12.** Produit en fibres minérales comprenant des fibres minérales en contact avec la composition de liant durcie selon l'une quelconque des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 583086 A
- EP 990727 A
- EP 1741726 A
- US 5318990 A
- US 20070173588 A
- WO 9936368 A
- WO 0105725 A
- WO 0196460 A
- WO 0206178 A
- WO 2004007615 A
- WO 2006061249 A
- WO 2008023032 A
- WO 201010618 A